# EUROPEAN PATENT SPECIFICATION

(11) **EP 0 716 009 B1**
(45) Date of publication and mention of the grant of the patent: **12.05.1999**
(21) Application number: 95119068.5
(22) Date of filing: 04.12.1995
(51) Int. Cl.: B62K 19/30, B62M 23/02

(54) **Battery case mounting structure for motor-bicycle**
Batteriekasten-Montageanordnung für Motorfahrrad
Structure de montage pour caisse de batterie pour une motocyclette

(30) Priority: 07.12.1994 JP 331223/94
(43) Date of publication of application: 12.06.1996
(73) Proprietor: HONDA GIKEN KOGYO KABUSHIKI KAISHA, Minato-ku Tokyo (JP)
(72) Inventor: Iseno, Mitsuru, c/o K.K. Honda Gijutsu Kenkyusho, Waki-shi, Saitama (JP); Takeuchi, Tsutomu, c/o K.K Honda Gijutsu Kenkyusho, Waki-shi, Saitama (JP); Kuroki, Masahiro, c/o K.K. Honda Gijutsu Kenkyusho, Waki-shi, Saitama (JP)
(74) Representative: Liska, Horst, Dr.-Ing.

(56) References cited:
- EP-A- 0 686 551
- PATENT ABSTRACTS OF JAPAN vol. 18, no. 136 (M-1572), 7 March 1994 & JP-A-05 319104 (YAMAHA MOTOR CO.), 3 December 1993,

## Description

The present invention relates to a battery case mounting structure of a motor-bicycle.

A generic battery case mounting structure for a motor-bicycle according to the preamble of claim 1 has been disclosed in Japanese Patent Laid-open No. 5-319104, wherein the rear portion of a battery case having a battery-side connector is fitted in and supported by a support box provided on the frame of the motor-bicycle, and the battery-side connector is connected to a motor-side connector provided in the support box. This support box is mounted on the frame either fixedly or rockably.

EP 0 686 551 A1 is a document according to Art. 54(3), wherein the battery case is not moved in the longitudinal direction of the body frame for pressing the battery-side connector onto the motor-side connector.

The first-mentioned battery case mounting structure, however, has disadvantages. For example, the support box rocking type requires multi-state actions for mounting/dismounting the battery case, and accordingly, it makes complex and takes a lot of labor in mounting/dismounting work and further it is increased in cost because of the complicated mounting structure. On the other hand, the support box fixing type, which does not disclose the fixing manner for the front portion of the battery case, may be made similarly complex if it adopts a general buckle structure. In view of the foregoing, the mounting/dismounting work and mounting structure for the battery case have been desired to be simplified.

In the connection between the battery-side connector and the motor-side connector described in the above-described example, a contact pressure tends to be changed due to vibration generated during running of the motor-bicycle. As the contact pressure is lowered, the durability of contacts is reduced. In this regard, the mounting structure capable of ensuring a high contact pressure has been desired. It is also desirable that the unsatisfactory setting of the battery case can be readily noticed.

To solve the above-described problems, according to a preferred mode of the present invention, there is provided a battery case mounting structure of a motor-bicycle, the vehicle body thereof including a body frame extending in the longitudinal direction between a front wheel and a rear wheel, comprising: a longitudinal battery case removably mounted on the vehicle body and containing a battery, a battery-side connector having a first terminal electrically connected to the battery is provided on the rear end portion of said battery case, and a motor-side connector having a second terminal electrically connected to the motor is mounted on the vehicle body, a locking device for locking the front end portion of said battery case at the vehicle body; a space positioned over the body frame for mounting the battery case by vertically moving said battery case into said space so that the longitudinal side of said battery case is substantially in parallel to the longitudinal side of the body frame, characterized in that the locking device is provided on the body frame at a position displaced forward from said motor-side connector by a distance substantially equal to the length of said battery case, the space is positioned between said locking device and said motor-side connector, and wherein, in said space, said battery case is slidable substantially in the longitudinal direction of the body frame for pressing said battery-side connector towards said motor-side connector.

Upon mounting of the battery case, the battery case is moved downward from the upper side of the body frame into the space between the locking device and the motor-side connector in such a manner that the longitudinal side thereof is substantially in parallel to the longitudinal side of the body frame and, at the same time, the rear end of the battery case is moved rearward substantially along the longitudinal direction of the body frame. With this operation, the rear portion of the battery-side connector is engaged with the motor-side connector and the front end of the batter-side connector is received in the locking device. Then, the locking device is fastened, to complete the battery case mounting operation. Upon dismounting of the battery case, the above operation is reversely performed after release of the locking device.

Such a mounting/dismounting operation is continuously performed in a manner similar to a single-action operation, as compared with the prior art operation requiring multi-stage actions. The battery case mounting structure can be also easily and speedily operated on the upper side of the body frame, and it is comparatively simple.

In the battery case mounting structure for a motor-bicycle according to the present invention, the battery-side connector is removably engaged with the motor-side connector by sliding the battery case substantially in the longitudinal direction of the body frame; a locking device for locking the front end portion of the battery case is provided on the body frame at a position shifted forward from the motor-side connector by a distance substantially equal to the length of the battery case; and the battery case is mounted and dismounted by vertically moving the battery case in a space positioned over the body frame and between the locking device and the motor-side connector in such a manner that the longitudinal side of the battery case is substantially in parallel to the longitudinal side of the body frame, and sliding the rear end portion of the battery case substantially in the longitudinal direction of the body frame.

The above mounting structure can be provided with a pressing means for pressing the battery case rearward when the battery case is mounted, and it can be further provided with a pop-up mechanism that lifts up the front portion of the battery case when the locking device is released.
The battery case mounting structure may further comprise a pressing means for pressing the battery case rearward when the battery case is fitted in place on the main frame, and a pop-up mechanism that lifts up the front part of the battery case when the locking device is unfastened.

In the case of provision of the pressing means, the battery case is pressed rearward by the pressing means when the battery case is mounted on the vehicular body, and thereby the batter-side connector is forcibly pressed to the motor-side connector. As a result, a contact pressure between the terminals of both the connectors is enhanced to the extent that it is difficult to be affected by vibration of the vehicular body generated during running of the vehicular body. The service life of contacts can be thus prolonged.

In the case of provision of the pop-up mechanism, by lifting up the front portion of the battery case when the locking device is released, the incomplete setting of the battery case can be readily and visually noticed. The incompletely set battery case can be thus completely set.

In the case of provision of the pressing means, the battery case is pressed rearward by the pressing means when the battery case is mounted on the vehicular body, and thereby the batter-side connector is forcibly pressed to the motor-side connector. As a result, a contact pressure between the terminals of both the connectors is enhanced to the extent that it is difficult to be affected by vibration of the vehicular body generated during running of the vehicular body. The service life of contacts can be thus prolonged.

In the case of provision of the pop-up mechanism, by lifting up the front portion of the battery case when the locking device is released, the incomplete setting of the battery case can be readily and visually noticed. The incompletely set battery case can be thus completely set.

The above mechanism may be provided with a rocking member changed between a position where it is rockably supported on the front portion of the body frame for lifting up the battery case and a position where it presses the battery case rearward; and a spring means for rockably biasing the rocking member toward the battery case lifting position. In this case, preferably, the spring means has a resilient force sufficient to support the weight of the front portion of the battery case when the rocking member is set at the lifting position, and the rocking means is tilted upward and rearward such that the upper end thereof abuts a stepped portion formed in the bottom of the front portion of the battery case.

In the case where the pop-up mechanism is composed of the rocking member and the spring means biasing the rocking member toward the lifting position, the pop-up mechanism functions both to pop up the battery case when the locking device is released and to press the battery case rearward to enhance the contact pressure when the locking device is fastened.

The pop-up action of the rocking member can be achieved by adjusting the resilience of the spring means to a resilience capable of supporting the weight of the front portion of the battery case. The battery case can be quickly set in place by tilting the rocking member obliquely, upward and rearward at the lifting position, pressing the upper end of the rocking member against the stepped portion formed in the front portion of the bottom of the battery case, and turning the rocking member downward by depressing the front end of the battery case.

Embodiments of the invention will now be described by way of example and with reference to the accompanying drawings, in which:-
Fig. 1 is a side view of essential portions of a front frame in a first embodiment of the present invention;
Fig. 2 is a side view of a bicycle provided with an auxiliary motive-power in the first embodiment;
Fig. 3 is a sectional view taken along the line 3-3 of Fig. 1;
Fig. 4 is a sectional view of a battery case in the first embodiment, with parts partially cut-away;
Fig. 5 is a view showing a front-side mounting structure of the battery case in the first embodiment;
Fig. 6 is a view showing essential portions of the front-side mounting structure of the battery case, as seen from the direction of the arrow Z in Fig. 1;
Fig. 7 is a view showing a rear-side mounting structure of the battery case in the first embodiment;
Fig. 8 is a sectional side view of essential portions of a second embodiment of the present invention;
Fig. 9 is a view taken along the direction of the arrow X in Fig. 8;
Fig. 10 is a view taken along the direction of the arrow Y in Fig. 8, and
Fig. 11 is a sectional side view of essential portions of a third embodiment of the present invention.

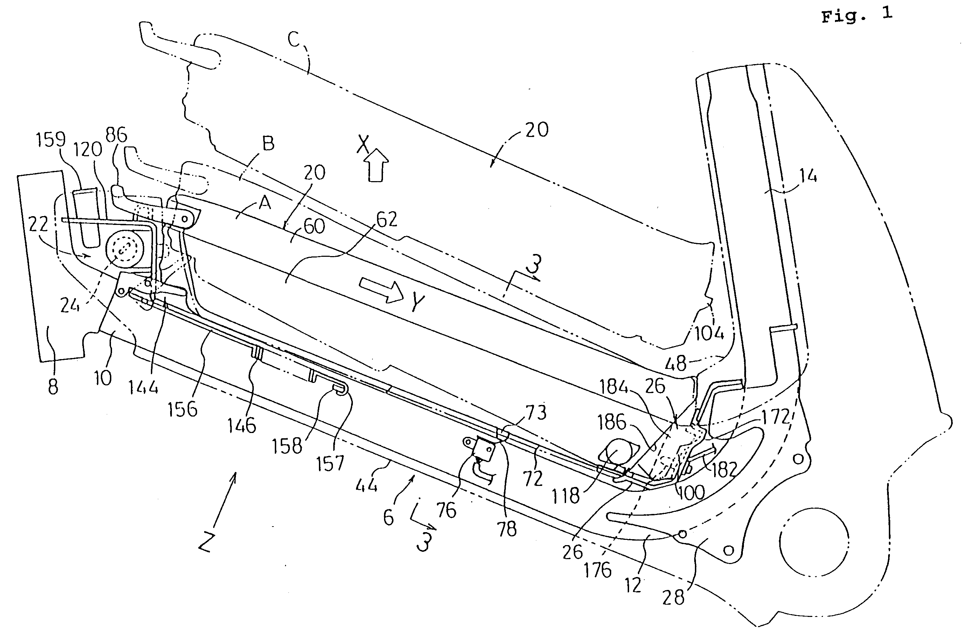

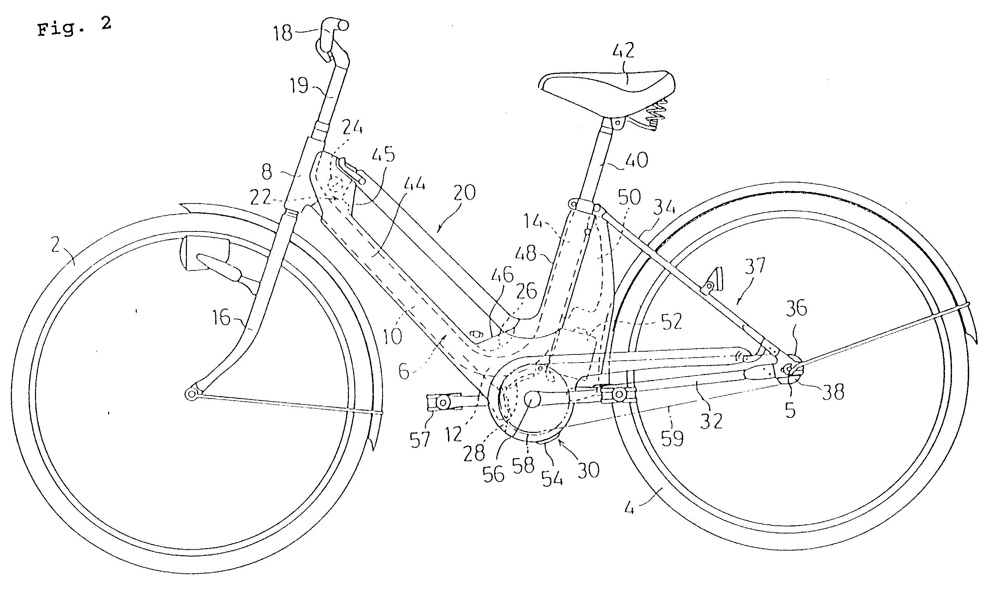

A first embodiment of the present invention is shown in Figs. 1 to 7. Fig. 2 is a side view of a motor-driven bicycle with an auxiliary motive-power unit used in this embodiment. The motor-driven bicycle includes a front frame 6 which is formed in a V-shape as seen from the side and disposed between a front wheel 2 and a rear wheel 4. The front frame 6 has a main frame 10 extending obliquely, downward, and backward from a head pipe 8; an intermediate portion 12 curved downward; and a seat frame 14 extending approximately in the vertical direction.

The head pipe 8 turnably supports a front fork 16 for supporting at its lower end the front wheel 2, and a steering post 19 mounting at the upper end a handle 18. On the main frame 10, a battery case 20 for containing a battery (described later) is removably mounted between a front-side fixing portion 22 and a motor-side connector 26 functioning as a male connector. The battery case 20 has a length being approximately the same as that of the main frame 10. In addition, reference numeral 24 designates a lock device.

The intermediate portion 12 supports an auxiliary motive-power generating device 30 through a hanger plate 28. A rear fork 32, with the front end mounted to the auxiliary motive-power generating device 30, extends approximately in the horizontal direction. The rear end of the rear fork 32 is connected to a bracket 36, together with the rear ends of a pair of right and left rear stays 34 extending obliquely and downward from the upper end of the seat frame 14, to form a rear frame 37. The bracket 36 rotatably supports a rear axle 5 of the rear wheel 4 and a driven sprocket 38.

A saddle seat 42 is supported on the upper end portion of the seat frame 14 through a seat post 40. The surroundings of the front frame 6 and the auxiliary motive-power generating device 30 are covered with a body cover 44. The body cover 44 is divided into right and left parts. The front end portion of the body cover 44 covers the front-side fixing portion 22, and is continuous to an inclined wall 45.

An inclined wall 46 is formed, on the rear end portion of the body cover 44, in such a manner as to be inclined obliquely, backward, and upward. A front portion of the seat frame 14 has an opening portion which is blocked by a front panel 48.

The auxiliary motive-power generating device 30 includes a control unit 50, a motor 52 and a transmission 54. A crank shaft 56, an output shaft of the transmission 54 is rotated integrally with a drive sprocket 58 for rotating the driven sprocket 38 of the rear wheel 4 through a chain 59.

Pedals 57 are mounted on the crank shaft 56, which are stepped on to be manually driven. At this time, the motor 52 is rotated by an electric-power supplied from a battery in the battery case 20, to generate an auxiliary motive-power. The control unit 50 controls rotation of the motor 52 on the basis of a torque transmitted from the pedals 57 and the rotational frequency of the drive sprocket 58.

Fig. 1 is a side view of the front frame 6 portion in the state that the body cover 44 is removed.

As shown in Fig. 1, the front-side fixing portion 22 is provided on the front end portion of the main frame 10, and the motor-side connector 26 is provided in the vicinity of the intermediate portion 12. The battery case 20 can be shifted between a mounting position shown by the solid line A, and a pop-up position shown by the virtual line B. At the mounting position, the front end portion of the battery case 20 is locked by the lock device 24 in the state that the rear end portion thereof is fitted to the motor-side connector 26. On the other hand, at the pop-up position, the front end portion of the battery case 20 is lifted after being released in locking.

At a position shown by the virtual line C, the battery case 20 is removed in the direction approximately perpendicular to the longitudinal direction of the main frame 10 (in the direction shown by the arrow X). The position shown by the virtual line C also shows the state before the battery case 20 is mounted. In addition, when being shifted between the mounting position A and the pop-up position B, the battery case 20 can be slid approximately along the longitudinal direction of the main frame 10 (in the direction shown by the arrow Y).

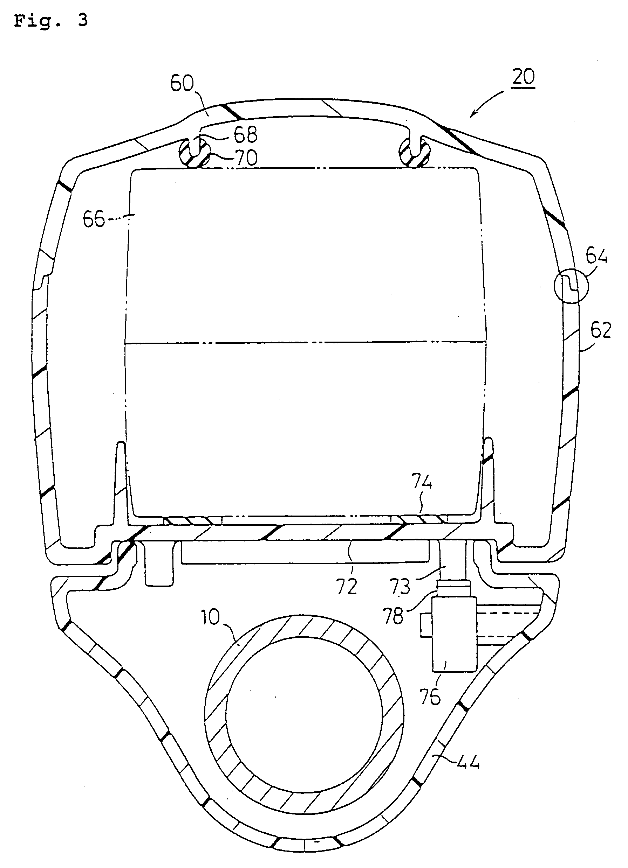

As shown in Fig. 3, the battery case 20 is a plastic member vertically divided into an upper case 60 and a lower case 62. Mating faces 64, 64 of both the cases 60 and 62 are each stepped, and are overlapped at the stepped portions, to form a labyrinth structure for preventing permeation of water.

A battery pack 66 is contained in the battery case 20. The upper portion of the battery pack 66 abuts rubber made grooved members 70 mounted on ribs 68 projecting downward from the inner surface of the upper case 60. On the other hand, the lower portion of the battery pack 66 abuts rubber made flat cushions 74 interposed between the bottom of the battery pack 66 and the bottom 72 of the lower case 62. The battery pack 66 is thus supported in the battery case 20 in such a manner as to be isolated from vibration.

In Fig. 3, reference numeral 76 designates a limit switch which is mounted on the inner surface of the body cover 44. When the battery case 20 is mounted on the body cover 44, a projection 73 projecting downward from the bottom 72 of the lower case 62 pushes down a downward extending plate spring 78. At this time, by the lowering of the plate spring 78, the limit switch 76 is turned on. On the other hand, the limit switch 76 is turned off when the battery case 20 is located at the pop-up position (described later).

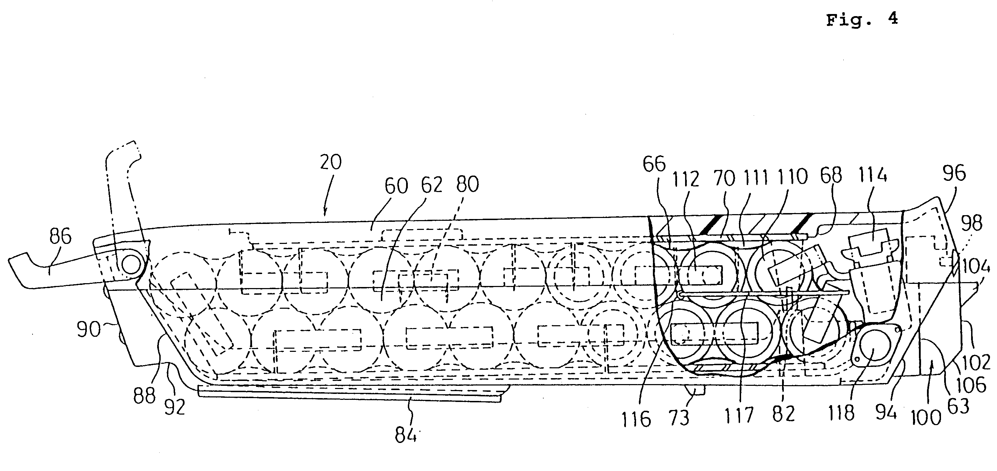

As shown in Fig. 4, the upper and lower cases 60, 62 of the battery case 20 are engaged with each other by means of an engagement claw 80 projecting upward from the lower case 62 on the first half of the side surface of the battery case 20, and are fastened to each other by a tapping screw 82 on the second half of the side surface of the battery case 20. In this way, the upper and lower cases 60, 62 are separably integrated with each other. A rubber cushion member 84 is interposed between the first half of the bottom of the lower case 62 and the main frame 10 side.

A handle 86 is turnably mounted on the front end portion of the battery case 20. An inclined stepped portion 88 is stepped from a front surface 90 of the battery case 20 into a shape corresponding to that of the inclined wall 45 provided at the front end portion of the body cover 44 for covering the front side fixing portion 22 (see Fig. 1). A pressing stepped portion 92 is formed in the lower portion of the front surface 90 in such a manner as to cut into the front surface 90.

A rear inclined surface 94 is formed on the rear end portion of the battery case 20 in such a manner as to be inclined obliquely, backward, and upward. The rear inclined surface 94 has a shape corresponding to that of the inclined wall 46 provided on the front end portion of the body cover 44 (see Fig. 2). A rear surface 96 of the upper case 60 is inclined in a shape having an inverse slope to that of the rear inclined surface 94.

A battery-side connector 100 functioning as a female connector is mounted on the rear end portion of the battery case 20 by means of a bolt 98 or the like. A rear surface 102 of the battery-side connector 100 forms a butt surface against the motor-side connector (described later). A positioning engagement projection 104, which is formed approximately into a triangular shape as seen from the side, projects from the center of the butt surface of the battery-side connector 100. The rear end of the bottom of the battery-side connector 100 forms a guide inclined surface 106 inclined backward and upward.

The battery pack 66 is composed of a combination battery which packs the surroundings of a plurality of unit cells 110 with a heat-contractive tube 111. In addition, the unit cells 110 are arranged in such a manner that two sets of unit cells each connected in series are stacked in the vertical direction. The unit cell 110 is of a charging type, for example, a Ni-Cd type.

The adjacent unit cells 110 are connected in series through each conducting plate 112, and are connected to a discharge terminal (described later) of the battery-side connector 100 through a fuse 114. In Fig. 4, reference numeral 116 designates a temperature detecting thermistor; 117 is a lead wire of the thermistor; and 118 is a charge terminal.

The charge terminal 118 contains a reverse-current preventing diode, and is mounted on the rear surface of the lower case 62. Since being provided separately from the discharge terminal, the charge terminal 118 enables the battery to be charged even when the battery case 20 is mounted or when it is removed.

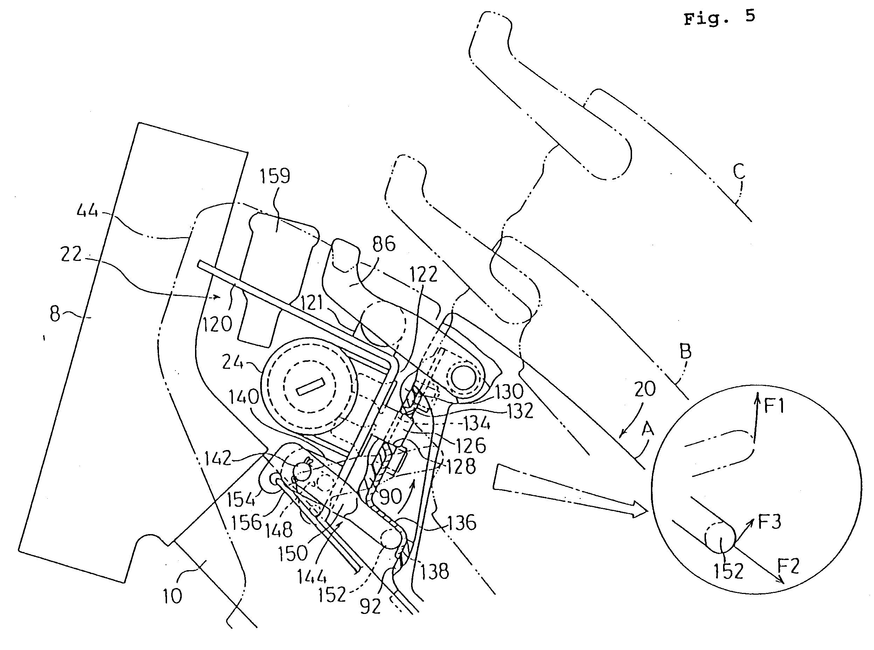

Fig. 5 shows a detailed structure of the front-side fixing portion 22 for fixing the battery case 20. The front-side fixing portion 22 includes the lock device 24 and a pop-up mechanism. The lock device 24 is mounted on a vertically extending upright wall 122 of a front bracket 120 approximately L-shaped in section. The front bracket 120 is provided between the head pipe 8 and the front end portion of the main frame 10.

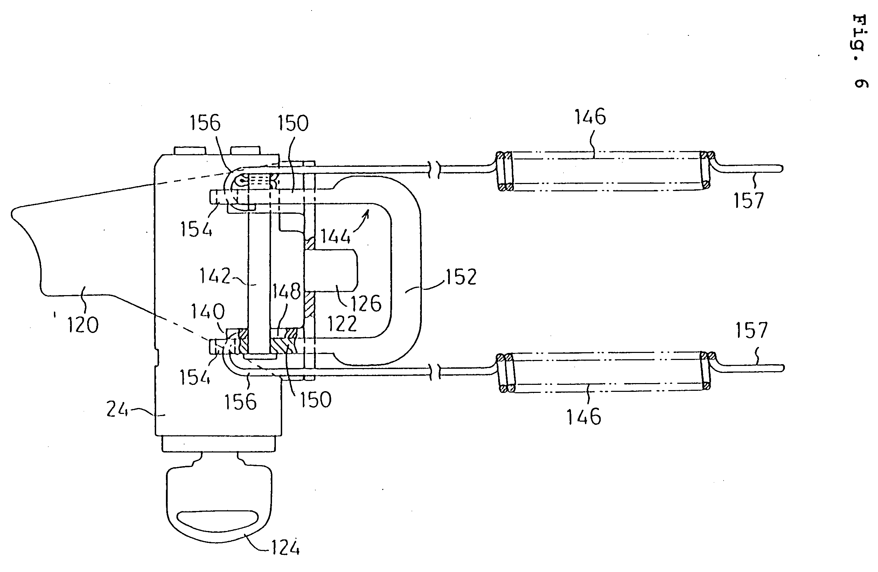

The lock device 24 has a combination switch function of turning on/off a power source using a key 124 (see Fig. 6) and of locking/unlocking the battery case 20 by inserting a lock pin 126 in a lock hole 128 formed in the front surface 90.

The key-position of the lock device 24 is as follows. At the on-position, the lock pin 126 is in the locking state, and the key 124 cannot be removed and a current is carried from the battery pack 66 to the motor 52. On the other hand, at the off-position, a current-carrying is stopped and the key 124 can be removed, but the lock pin 126 is left in the locking state. When the off-position is shifted to the lock position by pushing and turning the key 124, the lock pin 126 is released so that the battery case 20 can be removed.

In addition, a lock plate 132 is mounted inside the front surface 90 by means of a bolt 130 for reinforcing the front surface 90. An opening portion 134 corresponding to the lock hole 128 is formed in the lock plate 132. The lower end portion of the lock plate 132 extends up to the pressing stepped portion 92 and forms an exposed curved portion which constitutes longitudinal butt surface 136 to be butted upon unlocking and a butt surface 138 to be butted upon locking.

As shown in Fig. 6, the pop-up mechanism includes a pair of stays 140 provided on the upright wall 122 under the lock device 24; a rocking arm 144 supported by the stays 140 through a slide shaft 142; and tension springs 146 biasing the rocking arm 144 to turn it counterclockwise.

The stays 140 projects forward while being spaced at an interval in the vehicular body width direction. A slot 148 extending longer in the longitudinal direction is formed in each of the stays 140 for allowing the slide shaft 142 to be movable in the longitudinal direction. On the other hand, the rocking arm 144 is approximately U-shaped, and a pair of right and left flat portions 150 of the rocking arm 144 are each overlapped on the outer surfaces of the stays 140.

The slide shaft 142 extends to cross the right and left flat portions 150 through the slots 148 of the right and left stays 140, and is connected to the rocking arm 144 in such a manner that the rocking arm 144 is movable in the longitudinal direction relative to the stays 140 and is rockable around the slide shaft 142.

A portion of the rocking arm 144, which extends in the vehicular body width direction and connects the right and left flat portions 150 to each other, forms a butting portion 152. The butting portion 152 is to be butted to the butt surface 136 (to be butted upon unlocking) or the butt surface 138 (to be butted upon locking) of the lock plate 132.

The tension springs 146 are coil springs longitudinally extending along the right and left side surfaces of the main frame 10. With respect to the tension springs 146, front-side mounting portions 156 thereof are each locked with mounting projections 154 projecting from the front ends of the flat portions 150, and rear-side mounting portions 157 thereof are each locked with projections 158 projecting from the side surfaces of the main frame 10. The provision of a pair of the coil springs is effective to secure the action of the pop-up mechanism.

The tension springs 146 usually bias the rocking arm 144 backward, and also bias the butting portion 152 to turn it counterclockwise. Accordingly, at the pop-up position shown by the virtual line B, the rocking arm 144 is drawn backward and the slide shaft 142 is moved to the rear ends of the slots 148, so that the butting portion 152 pushes up the butt surface 136 (to be butted upon unlocking). As a result, the tensile strength of the tension springs 146 almost acts as a pushing-up force F1.

In the state of mounting the battery case 20 shown by the solid line A, the butt surface 136 (to be butted upon unlocking) pushes down the butting portion 152 clockwise, and the rocking arm 144 is positioned to be approximately parallel to the length direction of the main frame 10. As a result, the butting portion 152 is pushed forward against the rocking arm 144 by the butt surface 138 (to be butted upon locking), and the slide shaft 142 is moved to the front ends of the slots 148.

Thus, by the reaction of the tension springs 146, the butting portion 152 pushes the butt surface 136 (to be butted upon unlocking) and the butting surface 138 (to be butted upon locking). In this case, a force F2 applied by the butting portion 152 for pressing the butt surface 138 (to be butted upon locking) backward is very larger than a force F3 applied by the butting portion 152 for pushing up the butt surface 136 (to be butted upon unlocking). The pushing-up force F3 is sufficient to pop-up the front portion of the battery case 20 when the lock device 24 is released.

At the pop-up position, the slide shaft 142 is moved to the rear ends of the slots 148, and the butting portion 152 is turned counterclockwise to push up the butt surface 136 (to be butted upon unlocking).

In Figs. 1 and 5, reference numerals 121 and 159 designate indicators provided on the upper portion of the front bracket 120 for indicating the on-positions of the mounting stays 140 and the lock device 24 and the remaining capacity of the battery.

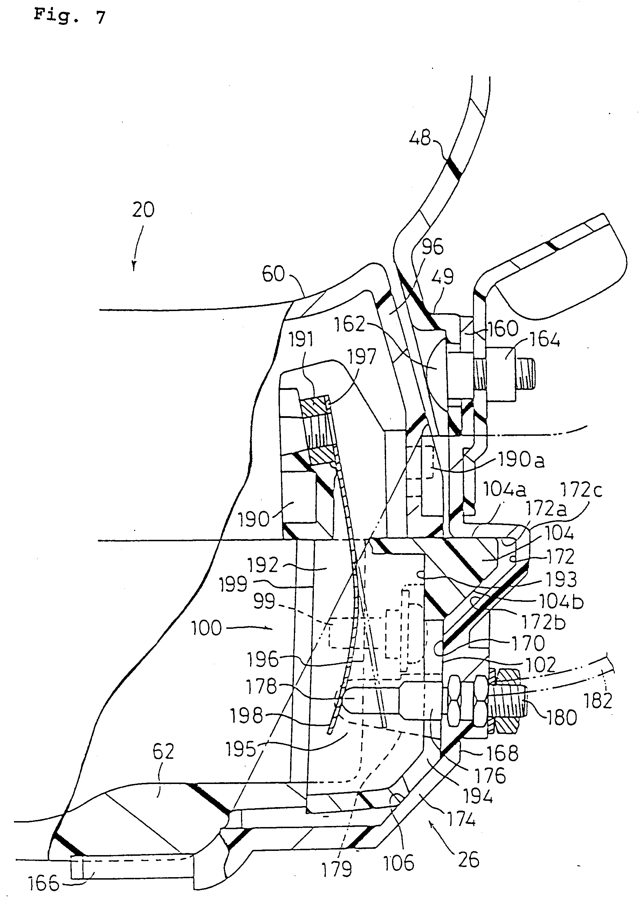

As is apparent from Fig. 1, the motor-side connector 26 to be fitted to the battery-side connector 100 provided on the rear portion of the battery case 20 is provided in the vicinity of the intermediate portion 12 of the main frame 10. As shown in Fig. 7, an upper mounting portion 160 of the motor-side connector 26 is overlapped on a front center portion 49 of the lower end portion of the opening/closing portion 48 and mounted thereto by means of a bolt 162 and a nut 164.

In addition, the inclination of the front center portion 49 is similar to that of the rear surface 96 of the lower case 60. The front center portion 49 is located so as to be spaced from the rear surface 96 of the case 60 at a slight gap upon mounting of the battery case 20. A lower mounting portion 166 of the motor-side connector 26 is mounted on the body cover 44 by means of a bolt or the like (not shown).

On the inner surface side of a rear surface 168 of the motor-side connector 26, an abutment surface 170 is formed. When the battery-side connector 100 is mounted, the rear surface 102 of the battery-side connector 100 abuts the abutment surface 170, to position the longitudinal direction of the battery. A projection 172c projects backward from the position corresponding to the positioning engagement projection 104 of the battery-side connector 100. And, the projection 172c having on its inner side an engagement recess 172 for receiving the positioning engagement projection 104. A guide surface 174 having an inclination being approximately the same as that of the guide inclined surface 106 of the battery-side connector 100 is formed at the position corresponding the guide inclined surface 106.

The engagement recess 172 is formed to be larger than the engagement projection 104. When the battery case 20 is mounted, a top portion 104a of the engagement projection 104 abuts a top portion 172a in the engagement recess 172, so that the battery case 20 is positioned in the vertical direction.

Lower-side inclined surfaces 172b and 104b of the engagement recess 172 and the engagement projections 104 are formed so as to be nearly equal to each other in inclination and to be separated from each other at a slight interval.

A pair of pin-like motor terminals 176 are provided on both sides of the abutment surface 170. Leading ends 178 of the motor terminals 176 project in the battery case 20. On the other hand, rear ends 180 of the motor terminals 176 exteriorly extend from the rear surface 168, and are connected to cords 182. The cords 182 are connected to the control unit 50.

A pair of side wall portions 184 for receiving the battery-side connector 100 are formed on both sides of the motor-side connector 26. Front edge portions 186 of the side wall portions 184 are disposed so as to be parallel to the inclined wall 46 of the battery case 20 with a slight gap (see Fig. 1).

An upper portion 190 of the battery-side connector 100 is positioned inside the upper case 60. Lower portions 192 of the battery-side connector 100 are mounted to the lower case 62 by means of bolts 98 fastened from the outside of the rear wall 63 (see Fig. 4). The rear-side center portion of the lower portion 192 forms a projecting portion 193 projecting outward and rearward from the center portion of the rear wall 93. On the projecting portion 193, the rear surface 102 and the engagement projection 104 are formed, and further terminal-passing holes 194 are formed at the positions corresponding to the motor terminals 176.

The terminal-passing holes 194 are communicated to recesses 195 formed in the lower portion 192 on the lower case 62 side. The motor terminal 176 has a length allowing the leading end 178 thereof to project in the recess 195 through the terminal-passing hole 194 upon mounting of the battery case 20.

A plate spring-like discharge terminal 196 is disposed in the recess 195 in such a manner as to extend longer in the vertical direction. An inverted U-shaped portion 197 formed on the upper end of the discharge terminal 196 is screwed with a nut 191 previously fixed on the upper portion 190, to be electrically connected to the battery pack 66.

A free lower end 198 of the discharge terminal 196 is positioned to cover the exit, facing to the recess 195, of the terminal-passing hole 194, as shown by the virtual line in Fig. 7. When the leading end 178 of the motor terminal 176 projects in the recess 195 through the terminal-passing hole 194 upon mounting of the battery case 20, the lower free end 198 is pushed forward and elastically deformed by the leading end 178 as shown by the solid line in Fig. 7. As a result, the lower free end 198 of the discharge terminal 196 is brought in contact with the leading end 178 of the motor terminal 176 at a high contact pressure.

At the mounting position (solid line A) and the pop-up position (virtual line B) of the battery case 20 in Fig. 1, a current-carrying state occurs when the leading ends 178 of the motor terminals 176 are contacted with the lower free ends 198 of the discharge terminals 196 through the terminal-passing holes 194. To cope with this inconvenience, the limit switch 76 functions as follows: namely, at the pop-up position, the limit switch 76 is turned off for cutting off a current flowing from the lower free end 198 to the leading end 178, and only at the mounting position, the limit switch 76 is turned on for allowing a current to flow from the lower free end 198 to the leading end 178.

The motor-side connector 26 is connected to or separated from the rear side of the battery case 20 by sliding the battery case 20 in the direction shown by the arrow Y in Fig. 1. In such a state, the motor-terminals 176 are connected to or separated from the discharge terminals 196 of the battery-side connector 100, and at the same time the engagement projection 104 of the battery-side connector 100 is inserted in or separated from the engagement recess 172 of the motor-side connector 26. At this time, the stroke amount of the battery case 20 in the Y direction is determined by the stroke amount of the slide shaft 142.

To be matched with a pair of the right and left motor terminals 176, a pair of the right and left recesses 195 are formed in such a manner as to hold a partition wall 199. A vertical groove is formed in the partition wall 199. A guide projection 179 is inserted in the vertical groove in such a manner as to project for separating the right and left motor-terminals 176 from each other.

The function of this embodiment will be described below. At the mounting position shown by the solid line A in Fig. 1, the battery-side connector 100 provided at the rear end portion of the battery case 20 is butted and fixed to the motor-side connector 26. The battery case 20 is also pushed backward by the tension spring 146 through the rocking arm 144, to generate a pressing force acting in the direction of connecting the motor terminals 176 to the discharge terminals 196, thus increasing the contact pressure applied between the lower free end 198 of the discharge terminal 196 and the leading end 178 of the motor terminal 176. Such a high contact pressure prevents variations in contact pressure such as chattering between both the terminals due to vibration of the vehicle. This is effective to suppress wear of the contacts, and to prolong the service life of the terminals.

At this time, since the plate spring-like lower free end 198 is contacted with the leading end 178 while being elastically deformed, the contact pressure is easily enhanced. Also, since the battery case 20 is inclined forward, obliquely and upward, an increase in contact pressure by the dead weight can be expected.

Since the vertical position of the battery case 20 can be determined by fitting the engagement projection 104 in the engagement recess 172, the battery case 20 will not slip off. Since the battery-side connector 100 on the rear end of the battery case 20 is fixedly fitted in the motor-side connector 26, the free lower ends 198 of the discharge-terminals 196 are positioned correctly relative to the motor-terminals 176, and plays caused by variations in accuracy of parts can be reduced to the least extent to secure reliable connection of the terminals.

In the case of removing the battery case 20, the lock device 24 is released by turning the key 124. At this time, the rocking arm 144 is returned by a spring force of the tension springs 146 until the slide shaft 142 reaches the rear ends of the slots 148. At the same time, the rocking arm 144 is rocked counterclockwise, to push up the front portion of the battery case 20. The battery case 20 is thus located at the pop-up position shown by the virtual line B in Figs. 1 and 5. After that, the handle 86 of the battery case 20 is pulled up in the direction approximately perpendicular to the length direction of the main frame 10 (in the direction by the arrow X in Fig. 1). In this way, the battery case 20 can be easily removed as shown by the virtual line C.

On the other hand, when being mounted, the battery case 20 is positioned over the main frame 10 approximately in parallel thereto, and is moved down in the direction approximately perpendicular to the length direction of the main frame 10 (in the direction shown by the arrow X in Fig. 1). The battery case 20 is then slid rearward approximately in parallel to the length direction of the main frame 10 (in the direction shown by the arrow Y in Fig. 1). After that, the battery-side connector 100 provided on the rear end of the battery case 20 is fitted to the motor-side connector 26.

Since the vertical position of the battery case 20 can be determined by fitting the engagement projection 104 in the engagement recess 172, the battery case 20 will not slip off. Since the battery-side connector 100 on the rear end of the battery case 20 is fixedly fitted in the motor-side connector 26, the free lower ends 198 of the discharge-terminals 196 are positioned correctly relative to the motor-terminals 176, and plays caused by variations in accuracy of parts can be reduced to the least extent to secure reliable connection of the terminals.

In this state, the rocking arm 144 is located at the position shown by the virtual line in Fig. 1, and the butt surface 136 (to be butted upon unlocking) of the front portion of the battery case 20 is butted to the butting portion 152 of the rocking arm 144. At this time, the pushing-up force of the tension spring 146 applied to the butting portion 152 supports the weight of the battery case 20. As a result, the battery case 20 is located at the pop-up position in which the front side thereof is slightly lifted upward as shown by the virtual line B.

In the case where the battery case 20 is not locked by the lock device 24, the battery case 20 is unstable. When the vehicle runs in such an unstable condition, there is a fear in generating slip-off of the battery case 20 or a failure in current-carrying between the motor terminals 176 and the lower free ends 198 of the discharge terminals 196. In this embodiment, however, when being not locked, the battery case 20 is necessarily located at the pop-position. As a result, an unstable condition of the battery case 20 can be visually observed, and thereby the locking can be certainly performed.

Next, the front end portion of the battery case 20 is pressed down. At this time, the butt surface 136 (to be butted upon unlocking) presses down the butting portion 152 clockwise, and thereby the rocking arm 144 is slid forward until the slide shaft 142 is moved up to the front ends of the slots 148. The rocking arm 144 is thus located at the position shown by the solid line in Fig. 1.

In such a position, the front end portion of the battery case 20 is locked with the lock device 24 by operation of the key 124. Of the spring force of the tension spring 146 applied to the butting portion 152, a component of pressing the butt surface 138 (to be butted upon locking) is increased, to thereby press rearward the battery case 20. The batter-side connector 100 is thus forcibly pressed in the motor-side connector 26, to be certainly fixed thereto.

At this time, the guide inclined surface 106 is guided along the guide surface 174, so that the top portion 104a of the engagement projection 104 abuts the top surface 172a of the engagement recess 172. The battery case 20 is thus vertically positioned. Moreover, the leading ends 178 of the motor terminals 176 enter deeply in the recesses 195, and thereby the lower free ends 198 of the discharge terminals 196 are elastically deformed to a large extent in the forward direction.

Such a battery case mounting/dismounting operation is continuously carried out in a manner similar to a single-action operation, as compared with the prior art operation requiring multi-stage actions. Moreover, the operation can be easily and speedily performed on the upper side of the body frame. In addition, the battery case mounting structure is comparatively simple.

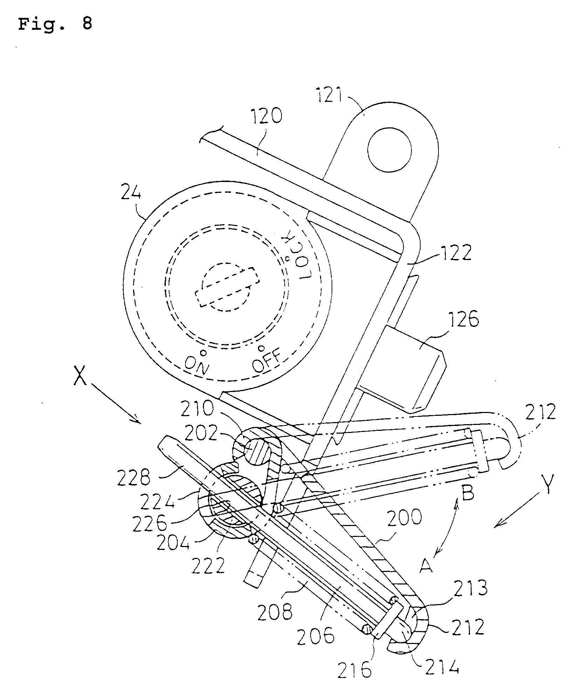

As shown in Figs. 8, 9 and 10, the pop-up mechanism includes a rocking plate 200, a hinge pin 202, a hinge plate 204, a push rod 206 and a compression coil spring 208.

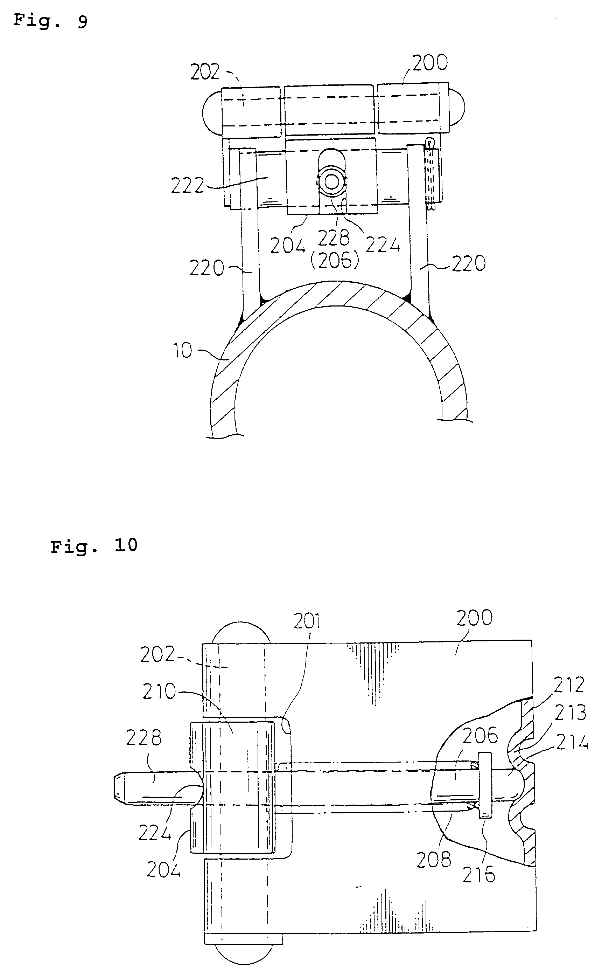

The front end of the hinge plate 204 is curled in a knuckle 210. As shown in Fig. 10, the knuckle 210 is received in a recess 201 formed in the rocking plate 200 and is turnably wound around the middle portion of the hinge pin 202. The opposite ends of the hinge pin 202 are inserted in knuckles formed near the opposite sides of one end of the rocking plate 200, respectively.

The other end of the rocking plate 202 is curved to form a curled end 212 which is pressed against the lower portion of the front end of the battery case. A pair of recesses 213 are formed in the middle portion of the inner surface of the curled end 212, and the rear end of the push rod 206 is locked between a pair of recesses 213 formed at the center of the inner surface of the curled end 212. The compression coil spring 208 is wound around the push rod 206 and is compressed between a flange 216 and the outer periphery of the hinge plate 204.

The hinge plate 204 is wound around a shaft 222 rotatably supported on a pair of stays 220 attached to the main frame 10. The hinge plate 204 is provided with a circumferential slot 224. A diametrical through-hole 226 (Fig. 8) is formed in the shaft 222 at a position corresponding to the slot 224, and the push rod 206 extends through the through-hole 226 so that the front end 228 of the push rod 206 projects from the shaft 222. The slot 224 allows the front end 228 of the push rod 206 to be rocked as the shaft 222 is turned.

At the pop-up position B, the compression coil spring 208 extends to a maximum and presses up the rocking plate 200 such that the curled end 212 extends obliquely upward. When the curled end 212 of the rocking plate 200 is depressed in such a state, the hinge plate 204 is deformed elastically to push the rocking plate 200 forward and also compresses the compression coil spring 208 to press forward the push rod 206 so that the rocking plate 200 is rocked downward.

Consequently, the rocking plate 200 is biased counterclockwise by the resilience of the compression coil spring 208, and an upward component force for lifting and a rearward component force greater than the upward component force appear at the curled end 212. The rest of this embodiment are the same as those of the first embodiment, and parts like or corresponding to those of the first embodiment are designated by the same reference characters.

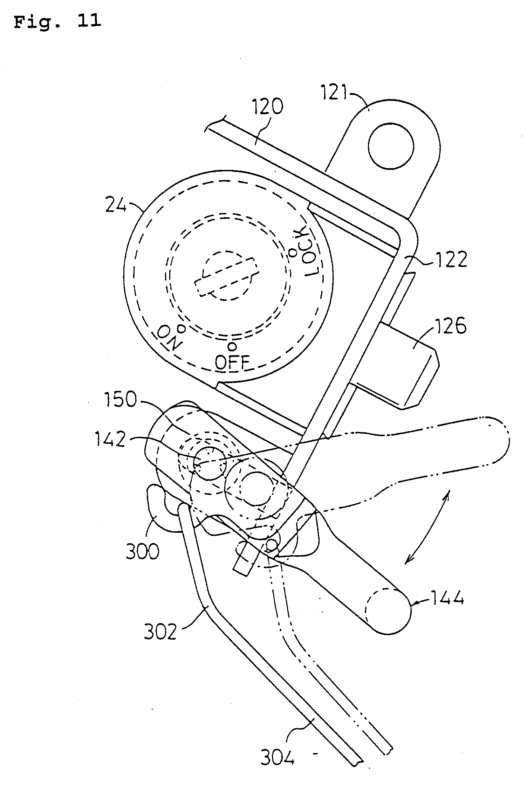

Fig. 11 is a sectional side view of a further embodiment of the pop-up mechanism of the present invention. This pop-up mechanism is substantially the same as that in the first embodiment, except that the mounting portion of the tension spring to the rocking arm 144 in the first embodiment is changed. Specifically, hook-like engagement portions 300 project from the middle portions of the flat legs 150, respectively. A locking rod 304 of the tension spring is locked at the leading end (not visible in the figure) with the hook-like engagement portion 300. It is to be noted that a curving portion 302 curved at obtuse angles is provided at the middle portion of the locking rod 304. With this configuration, it becomes possible to make easy the assembling in mounting the locking rods 304 to the rocking arm 144.

The battery-side connector 100 and the motor-side connector 26 may be interchanged in the fitting relation from each other. Similarly, the engagement projection 104 and the engagement recess 172 may be interchanged in the fitting relation from each other.

Summarized, it is an object of the invention is to make easy mounting/dismounting of a battery case.

A lock device 24 and a pop-up mechanism are provided at the front end portion of a main frame 10, and a motor-side connector 26 of a box-like female type is provided at the rear end portion of the main frame 10. An engagement recess 172 is provided at the center on the back surface of the motor-side connector 26. A female type battery-side connector 100 is provided at the rear end portion of a battery case 20, and an engagement projection 104 is provided at the center on the back surface of the battery-side connector 100. When the battery case 20 is slid rearward on the main frame 10 substantially in the direction shown by the arrow Y, the battery-side connector 100 is fitted to the motor-side connector 26. At the same time, the engagement projection 104 is fitted in the engagement recess 172. The front portion of the battery case 20 is lifted by a rocking arm 144 in the state that the locking is released, and is thus placed at the pop-up position shown by the virtual line B. When the front portion of the battery case 20 is depressed and is locked by the locking device 24, the rocking arm 144 is placed at the mounting position shown by the solid line A against the spring force of a tension spring 146, to press the battery case 20 rearward. The battery-side connector 100 and the motor-side connector 26 are certainly fixed to each other, to enhance a contact pressure between the terminals of both the connectors 100, 26.

## Claims

1. Battery case mounting structure of a motor-bicycle, the vehicle body thereof including a body frame (6) extending in the longitudinal direction between a front wheel (2) and a rear wheel (4), comprising:
a longitudinal battery case (20) removably mounted on the vehicle body and containing a battery (66),
a battery-side connector (100) having a first terminal electrically connected to the battery (66) is provided on the rear end portion of said battery case (20), and a motor-side connector (26) having a second terminal (176) electrically connected to the motor (52) is mounted on the vehicle body,
a locking device (24) for locking the front end portion of said battery case (20) at the vehicle body;
a space positioned over the body frame (6) for mounting the battery case (20) by vertically moving said battery case (20) into said space so that the longitudinal side of said battery case (20) is substantially in parallel to the longitudinal side of the body frame,
**characterized in that** the locking device (24) is provided on the body frame (6) at a position displaced forward from said motor-side connector (26) by a distance substantially equal to the length of said battery case (20),
the space is positioned between said locking device (24) and said motor-side connector (26), and
wherein, in said space, said battery case (20) is slidable substantially in the longitudinal direction (y) of the body frame (6) for pressing said battery-side connector (100) towards said motor-side connector (26).

2. A battery case mounting structure for a motor-bicycle according to claim 1, further comprising a pressing means (144) for pressing the battery case (20) rearward when the battery case (20) is mounted.

3. A battery case mounting structure for a motor-bicycle according to claim 1, further comprising a pop-up mechanism (144, 146) that lifts up the front portion of the battery case (20) when the locking device (24) is released.

4. A battery case mounting structure for a motor-bicycle according to claim 3, wherein the pop-up mechanism comprises:
a rocking member (144) changed between a position where it is rockably supported on the front portion of the body frame for lifting up said battery case (20) and a position where it presses said battery case (20) rearward; and
a spring means (146) for rockably biasing said rocking member (144) toward the battery case lifting position.

5. A battery case mounting structure for a motor-bicycle according to claim 4, wherein said spring means (146) has a resilient force sufficient to support the weight of the front portion of said battery case (20) when said rocking member (144) is set at the lifting position, and said rocking means (144) is tilted upward and rearward such that the upper end thereof abuts a stepped portion (138) formed in the bottom of the front portion of said battery case (20).

## Patentansprüche

1. Batteriegehäuse-Anbringestruktur eines Kraftrads, dessen Fahrzeugrumpf einen sich in der Längsrichtung zwischen einem Vorderrad (2) und einem Hinterrad (4) erstreckenden Hauptrahmen (6) enthält, umfassend:
ein längliches Batteriegehäuse (20), das an dem Fahrzeugrumpf entfernbar angebracht ist und eine Batterie (66) enthält,
einen batterieseitigen Verbinder (100), dessen mit der Batterie (66) elektrisch verbundener erster Anschluß an dem hinteren Endabschnitt des Batteriegehäuses (20) vorgesehen ist, und einen motorseitigen Verbinder (26), dessen mit dem Motor (25) elektrisch verbundener zweiter Anschluß (176) an dem Fahrzeugrumpf angebracht ist,
eine Sperrvorrichtung (24) zum Versperren des vorderen Endabschnitts des Batteriegehäuses (20) an dem Fahrzeugrumpf,
einen über dem Hauptrahmen (6) angeordneten Raum zum Anbringen des Batteriegehäuses (20) durch vertikales Bewegen des Batteriegehäuses (20) in den Raum derart, daß die Längsseite des Batteriegehäuses (20) im wesentlichen parallel zur Längsseite des Hauptrahmens ist,
dadurch gekennzeichnet, daß die Sperrvorrichtung (24) an dem Hauptrahmen (6) in einer Position vorgesehen ist, die um einen Abstand, der im wesentlichen gleich der Länge des Batteriegehäuses (20) ist, von dem motorseitigen Verbinder (26) nach vorne versetzt ist,
wobei der Raum zwischen der Sperrvorrichtung (24) und dem motorseitigen Verbinder (26) angeordnet ist, und
wobei in dem Raum das Batteriegehäuse (20) im wesentlichen in der Längsrichtung (Y) des Hauptrahmens (6) verschiebbar ist, um den batterieseitigen Verbinder (100) zu dem motorseitigen Verbinder (26) zu drücken.

2. Batteriegehäuse-Anbringestruktur für ein Kraftrad nach Anspruch 1, ferner umfassend ein Druckmittel (144) zum Drücken des Batteriegehäuses (20) nach hinten, wenn das Batteriegehäuse (20) angebracht ist.

3. Batteriegehäuse-Anbringestruktur für ein Kraftrad nach Anspruch 1, ferner umfassend einen Hochspringmechanismus (144, 146), der den vorderen Abschnitt des Batteriegehäuses (20) anhebt, wenn die Sperrvorrichtung (24) gelöst ist.

4. Batteriegehäuse-Anbringestruktur für ein Kraftrad nach Anspruch 3, wobei der Hochspringmechanismus umfaßt:
ein Schwenkelement (144), das zwischen einer Stellung, in der es schwenkbar an dem vorderen Abschnitt des Hauptrahmens zum Anheben des Batteriegehäuses (20) gelagert ist, und einer Stellung, in der es das Batteriegehäuse (20) nach hinten drückt, geändert wird; und
ein Federmittel (146) zum schwenkbaren Spannen des Schwenkelements (144) in die Batteriegehäuse-Anhebestellung.

5. Batteriegehäuse-Anbringestruktur für ein Kraftrad nach Anspruch 4, wobei das Federmittel (146) eine ausreichende Federkraft hat, um das Gewicht des vorderen Abschnitts des Batteriegehäuses (20) zu tragen, wenn sich das Schwenkelement (144) in der Anhebestellung befindet, und das Schwenkelement (144) derart nach oben und nach hinten gekippt ist, daß sein Oberende an einem Stufenabschnitt (138) anliegt, der im Boden des vorderen Abschnitts des Batteriegehäuses (20) ausgebildet ist.

## Revendications

1. Structure de montage de réceptacle de batterie d'une bicyclette à moteur, le corps de véhicule de celle-ci comprenant un cadre (6) s'étendant dans le sens longitudinal entre une roue avant (2) et une roue arrière (4), comprenant :
un réceptacle longitudinal de batterie (20) monté de manière amovible sur le corps de véhicule et contenant une batterie (66),
un connecteur côté batterie (100) comportant une première borne connectée électriquement à la batterie (66) qui est disposé sur la partie d'extrémité arrière dudit réceptacle de batterie (20), et un connecteur côté moteur (26) comportant une seconde borne connectée électriquement au moteur (52) qui est monté sur le corps de véhicule,
un dispositif de blocage (24) pour bloquer la portion d'extrémité avant du réceptacle de batterie (20) sur le corps du véhicule ;
un espace situé au-dessus du cadre (6) destiné au montage du réceptacle de la batterie (20) par déplacement vertical dudit réceptacle de batterie (20) à l'intérieur dudit espace de sorte que le côté longitudinal dudit réceptacle de batterie (20) est essentiellement parallèle au côté longitudinal du cadre,
caractérisée en ce que le dispositif de blocage (24) est aménagé sur le cadre (6) dans une position située à l'avant dudit connecteur côté moteur (26) à une distance essentiellement égale à la longueur dudit réceptacle de batterie (20),
l'espace étant situé entre ledit dispositif de blocage (24) et ledit connecteur côté moteur (26), et
dans laquelle, dans ledit espace, ledit réceptacle de batterie (20) peut essentiellement coulisser dans le sens longitudinal (y) du cadre (6) afin de presser ledit connecteur côté batterie (100) contre ledit connecteur côté moteur (26).

2. Structure de montage de réceptacle de batterie pour bicyclette à moteur selon la revendication 1, comprenant en outre des moyens de pression (144) destinés à presser le réceptacle de batterie (20) vers l'arrière lorsque le réceptacle de batterie (20) est monté.

3. Structure de montage de réceptacle de batterie pour bicyclette à moteur selon la revendication 1, comprenant en outre un mécanisme de dégagement (144, 146) qui lève la partie avant du réceptacle de batterie (20) lorsque le dispositif de blocage (24) est libéré.

4. Structure de montage de réceptacle de batterie pour bicyclette à moteur selon la revendication 3, dans laquelle le mécanisme de dégagement comprend :
un élément basculeur (144) changeant de position entre une position dans laquelle il est supporté en basculement sur la partie avant du cadre afin de soulever ledit réceptacle de batterie (20) et une position dans laquelle il presse ledit réceptacle de batterie (20) vers l'arrière; et
des moyens de ressort (146) destinés à décentrer en basculement ledit élément basculeur (144) vers la position de levage du réceptacle de batterie.

5. Structure de montage de réceptacle de batterie pour bicyclette à moteur selon la revendication 4, dans laquelle les moyens de ressort (146) ont une force élastique suffisante pour supporter le poids de la partie avant dudit réceptacle de batterie (20) lorsque ledit élément basculeur (144) est placé en position de levage, et que lesdits moyens de basculement (144) sont inclinés vers le haut et vers l'arrière de sorte que l'extrémité supérieure de ceux-ci vient en butée sur une partie étagée (138) formée dans l'embase de la partie avant dudit réceptacle de batterie (20).
